# EUROPÄISCHE PATENTANMELDUNG

(11) **EP 0 750 162 A2**
(43) Veröffentlichungstag der Anmeldung: **27.12.1996**
(21) Anmeldenummer: 96109921.5
(22) Anmeldetag: 20.06.1996
(51) Int. Cl.: F23J 13/04, F16L 21/02

(54) **Abdichtvorrichtung für Kaminrohre**

(30) Priorität: 21.06.1995 DE 29510018 U; 28.11.1995 DE 29518815 U
(71) Anmelder: Thoma, Norbert, 93057 Regensburg (DE)
(72) Erfinder: Thoma, Norbert, 93057 Regensburg (DE)
(74) Vertreter: Wasmeier, Alfons, Dipl.-Ing.

(57) **Zusammenfassung**

Abdichtvorrichtungen für Kaminrohre werden in unterschiedlichen Ausführungsformen erläutert. Bei einer Ausführungsform ist im zylindrischen Ringraum (24) zwischen zwei ineinander angeordneten Ringraumabschnitten zweier übereinander gesetzter Rohre (25,26) eine zylinderförmige, zumindest teilelastische Dichtung (21) angeordnet, deren untere Begrenzung an die horizontale Ringdichtung anschließt; die zylinderförmige Dichtung bildet gleichzeitig eine Führung zwischen den beiden Rohrabschnitten. Bei einer bevorzugten Ausführungsform der Erfindung ist die Dichtung im Bereich zwischen den beiden Ringraumabschnitten konisch bzw. kegelförmig ausgebildet und koaxial zur Rohrachse eingesetzt, und der Dichtungsdurchmesser ist am oberen Ende des kopfartig erweiterten Rohrabschnittes größer als am entgegengesetzten Ende. In weiterer Ausgestaltung ist die Dichtung vom oberen Ende des kopfartig erweiterten Rohrabschnitts zum unteren Ende verlaufend mit zunehmender Wandstärke ausgebildet. Die Länge des Mantels der Dichtung kann dabei erheblich kleiner ausgebildet werden als die Länge des kopfartig erweiterten Rohrabschnittes (Muffe).

## Beschreibung

Die Erfindung betrifft eine Abdichtvorrichtung nach dem Oberbegriff des Anspruches 1, wobei insbesondere Kaminrohre mit Kopf bzw. Muffe aus Schamotte, schamotteähnlichem Material oder Spezialmetall verwendet werden, und wobei der Kopf des unteren Kaminrohres den Fuß des oberen Kaminrohres aufnimmt, derart, daß die Innenseite der übereinander gesetzten Rohre einen durchgehenden Zylinder mit gleichbleibendem Durchmesser bildet.

Jeweils zwei benachbarte, übereinander gesetzte Rohre sind stirnseitig mit einem Dichtring gegeneinander abgedichtet, der zwischen den beiden einander zugewandten horizontalen, stirnseitigen Auflageflächen zweier benachbarter Rohrabschnitte liegt. Eine derartige Ringdichtung muß einerseits die sehr hohen Rauchgastemperaturen von bis ca. 600° C aushalten, und andererseits inert oder weitgehend inert gegenüber den im Rauchgas enthaltenen aggressiven Abgasstoffen, insbes. Schwefelsäure, sein. Die bekannten, derzeit verwendeten Dichtungen erfüllen diese Aufgabe nicht zufriedenstellend, so daß diese Ringdichtungen im Betrieb häufig zerstört werden und ausgewechselt werden müssen.

Desweiteren sind bei bekannten Rohrverbindungen im vertikalen Ringraum zwischen Kopf des unteren Rohres und unterem Ende des oberen Rohres zur Führung der beiden Rohrringabschnitte relativ zueinander lose Füllmaterialien vorgesehen, die die Rohre miteinander ausgerichtet halten. Diese losen Füllmaterialien ergeben jedoch keine ausreichende Führung der Rohre beim Einsetzen.

Aus EP 0 424 617 ist ein aus einzelnen Rohrabschnitten aufgebautes Rauchrohr eines Kamins bekannt, bei dem im Zwischenraum zwischen der Außenwand eines Rohrendes und der Innenwand der Rohrmuffe des anschließenden nächsten Rohrabschnittes eine Schicht aus Keramikfasermaterial zur Befestigung und Abdichtung der Rohrabschnitte angeordnet ist, deren Dicke im unverdichteten Zustand vor dem Einsetzen des Rohrendes in die Muffe die Dicke des Zwischenraumes übersteigt. Damit tritt an dem Dichtmaterial eine Flächenpressung auf. Das Keramikmaterial muß zur Verhinderung des Verschiebens des Materials beim Einfügen des nächst oberen Rohrabschnittes fixiert werden, z.B. durch Ankleben des Keramikmaterials an der Muffeninnenwand, oder durch Ausbildung eines dicken Randwulstes an einer Schulter der Muffeninnenwand, oder durch Umschlagen des Keramikmaterials über dem oberen Muffenrand auf die Außenseite der Muffe. Das Keramikmaterial kann als geschlossenes Band zum Einlegen in die Muffe ausgebildet sein und wird hierzu in Schlauchform hergestellt und es wird bevorzugt, das Keramikmaterial in Streifenform zu verwenden, wobei die Länge des Streifens annähernd dem Innenumfang der Muffe entspricht. Werden merhere Rohre übereinander gesetzt, wird aufgrund des Gewichtes der Rohranordnung die Flächenpressung sehr hoch, so daß die Rohre an den Muffen brechen können.

Aufgabe der Erfindung ist es, Abdichtvorrichtungen in Form von Fertigdichtungen für derartige Kaminrohre zu schaffen, die einerseits sowohl die hohen Temperaturen wie auch die aggressiven Stoffe der Abgase aushalten und die andererseits als Führungen beim und nach dem Einsetzen der Rohre dienen.

Desweiteren ist Aufgabe der Erfindung, derartige Abdichtvorrichtungen in der Weise weiterzuentwickeln, daß ein besonders einfaches und einfach herzustellendes Dichtungselement mit einem Minimum an Dichtungsmaterial erzielt wird und das Einsetzen der Dichtung auf besonders einfache Weise möglich ist.

Gemäß der Erfindung wird diese Aufgabe mit den Merkmalen des Kennzeichens der Ansprüche 1, 5 oder 6 gelöst. Weitere Ausgestaltungen der Erfindung sind Gegenstand der Unteransprüche.

Entsprechend einer Ausführungsform der Erfindung ist der zylindrische Spalt zwischen den einander zugeordneten Rohrabschnitten zweier benachbarter Rohre mit einer zylinderförmigen Dichtung versehen, die mit der horizontalen Ringdichtung, die bei bekannten Abdichtvorrichtungen bereits verwendet wird, zusammenwirkt; dieses Zusammenwirken besteht darin, daß die untere Begrenzung der zylinderförmigen Dichtung in Anlage bzw. Kontakt mit der Umfangswand der horizontalen Ringdichtung steht, so daß der gesamte Spalt, der zwischen zwei benachbarten Rohren besteht, weitgehend durch die beiden Dichtungen ausgefüllt ist. Die Wandungen der Kaminrohre sind, soweit es sich um Schamotterohre handelt, nicht vollständig eben, aufgrund der elastischen Ausbildung der Dichtungen und des Druckes der übereinander stehenden Rohre passen sich die Dichtungen jedoch den Unebenheiten der Außenflächen der Rohre an.

Nach einer anderen Ausführungsform der Erfindung ist die Form der zylindrischen Dichtung so gewählt, daß die vertikale Zylinderwand sich von oben nach unten konisch leicht erweitert und die Wanddicke der zylinderförmigen Dichtung im unteren Bereich den Spalt weitgehend ausfüllt, so daß ein fester Sitz zwischen den beiden Rohrwänden erzielt wird und gleichzeitig durch die zylinderförmige Dichtung eine besonders gute Führung beim und nach dem Einsetzen der Rohre erreicht wird.

Bei einer weiteren Ausführungsform der Erfindung ist die zylinderförmige Dichtung einstückig mit der horizontalen Ringdichtung so ausgebildet, daß die Dichtung eine Zylinderform mit sich verengendem Hals aufweist, wobei die Wandstärke der Dichtung gleichförmig über den gesamten Wandverlauf sein kann, oder aber die vertikale zylinderförmige Wand zur verbesserten Führung des aufzusetzenden Rohres ebenfalls konisch sich nach unten erweiternd ausgebildet ist.

Die Dichtung ist zumindest teilelastisch ausgebildet, wird in die gewünschte Form gepreßt, gebacken oder dergl., und die Dichtung wird in den Kopfteil des unteren Rohres eingelegt und anschließend das nach oben anschließende Rohr eingesetzt.

Die Dichtung ist aus Mineralfasern hergestellt, beispielsweise Silikatfasern bzw. Keramikfasern, und vorzugsweise aus Aluminium-Silikatfasern, die aus einem hohen Anteil an Aluminiumoxid, einem hohen Anteil an amorphem Siliziumoxid, einem geringen Anteil an Zirkonoxid, einem geringen Anteil an Boroxid und einem sehr geringen Anteil an anorganischen Spurenelementen besteht. Desweiteren weist die Silikatfaser Zellulose sowie eine Chromstahldrahtseele oder Glasfilamentseele auf.

Bei einer bevorzugten Ausführungsform der Erfindung ist die Abdichtvorrichtung rohrförmig konisch nach unten zulaufend und mit einem oberen, sich nach außen erweiternden Randabschnitt ausgebildet. Sie wird mit dem kopfartig erweiterten ringförmigen Abschnitt des unteren Rohres so verbunden, daß der sich radial nach außen erweiternde Rand der Dichtung auf der kopfartigen Erweiterung aufsitzt und in dieser Position gehalten wird. Die Dichtung endet im Abstand über dem Knieteil des unteren Rohres am Übergang zum Kopf und besteht aus einem relativ kurzen Mantel, der am Übergang in den sich radial nach außen erweiternden Flansch an der Innenseite des oberen Kopfendes anliegt und am unteren Ende ein Spiel zwischen der Innenwandung der Muffe und dem unteren Ende der Außenfläche der Dichtung hat. Der Innenradius der Dichtung am unteren Ende wird etwas kleiner gewählt als dem Außenradius des Fußendes des Rohres entspricht, so daß bei eingesetzter Dichtung und beim Einsetzen des oberen Kaminrohres eine einwandfreie Dichtwirkung dadurch erzielt wird, daß die Dichtung durch den Rohrfuß komprimiert wird.

Die radial nach außen verlaufende Erweiterung der Dichtung kann beispielsweise ringartig kontinuierlich umlaufend geformt sein; diese Erweiterung kann jedoch auch in Form von flanschartigen Einzelabschnitten bzw. fingerartigen Abschnitten ausgebildet sein, die die Dichtung am Rohrkopf fixieren.

Die Dichtung selbst ist z.B. als Formteil ausgebildet, das in die gewünschte Form gepreßt oder gegossen ist, sie kann jedoch auch als ebene Fläche ausgebildet sein, die zu dem benötigten Konus zusammengerollt wird, wenn sie in den Spalt zwischen zwei übereinander angeordneten Kaminrohren eingesetzt wird. In diesem Fall kann die radial nach außen gerichtete Erweiterung in Umfangsrichtung geschlitzt bzw. eingeschnitten oder ausgespart sein, damit die horizontale Erweiterung aus der Fläche abgebogen werden kann.

In weiterer Ausgestaltung der Erfindung ist die Mantelfläche der Dichtung, die im Ringspalt zwischen zwei benachbarten Rohren eingesetzt ist, nach unten mit zunehmender Dicke ausgebildet, so daß die Außenfläche des Mantels der Dichtung im wesentlichen an der Innenfläche der kopfartigen Erweiterung des unteren Rohrabschnittes anliegt und die Innenfläche des Mantels der Dichtung konisch mit sich veränderndem Durchmesser nach unten ausgeführt ist.

Bei der Dichtung nach der Erfindung tritt eine oben in Verbindung mit EP 0 424 617 beschriebene extrem hohe Flächenpressung nicht auf, weil die Dichtung mit einer radialen Dicke ausgeführt ist, die geringer ist als der radiale Spalt oder allenfalls gleich dem radialen Spalt zwischen der äußeren Umfangsfläche eines oberen Rohres an dessen unteren Ende und der inneren Umfangsfläche der dieses Rohr aufnehmenden Rohrmuffe des darunter angeordneten Rohres.

Nachstehend wird die Erfindung in Verbindung mit der Zeichnung anhand von Ausführungsbeispielen erläutert. Es zeigt:
- Fig. 1: eine schematische Darstellung einer Ausführungsform der Erfindung im Schnitt,
- Fig. 2: eine Schnittdarstellung einer anderen Ausführungsform der Erfindung,
- Fig. 3: eine spezielle Ausführungsform einer konischen Dichtung,
- Fig. 4: eine weitere Ausführungsform der erfindungsgemäßen Abdichtvorrichtung im Schnitt,
- Fig. 5: eine Schnittansicht der Abdichtvorrichtung nach Fig. 4, eingesetzt in zwei übereinander angeordnete Kaminrohre,
- Fig. 6: eine andere Ausführungsform einer Abdichtvorrichtung nach der Erfindung in perspektivischer Darstellung,
- Fig. 7: einen Ausschnitt der Abwicklung einer Abdichtvorrichtung nach Fig. 6,
- Fig. 8: eine weitere Ausführungsform der Abdichtvorrichtung in Aufsicht, und
- Fig. 9: eine andere Ausführungsform der Abdichtvorrichtung im Schnitt.

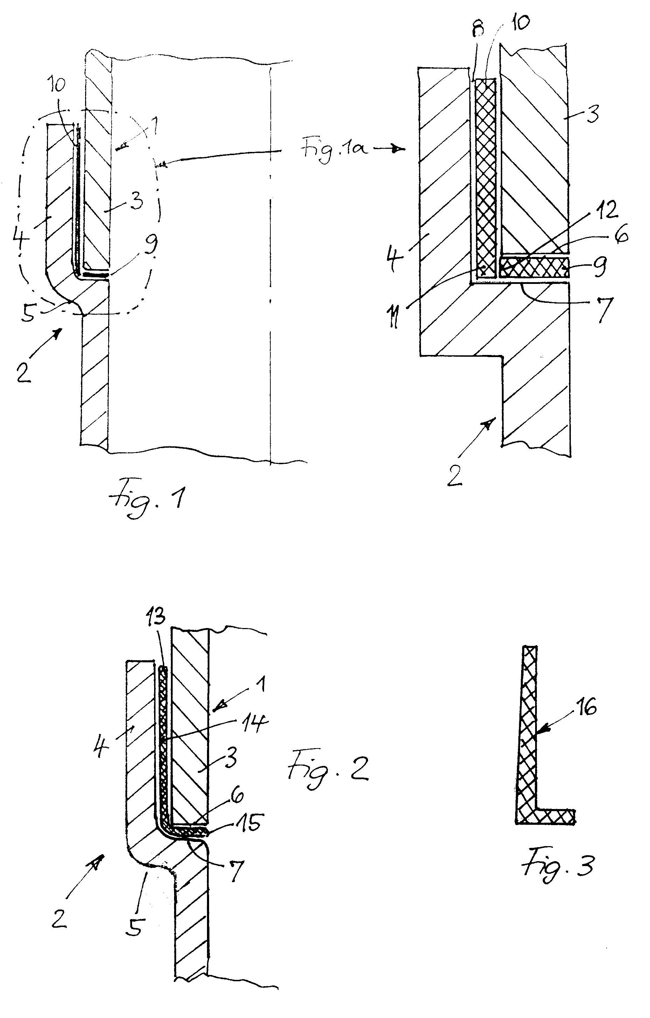

In Fig. 1 ist ein Kaminrohr 1 mit einem unteren zylindrischen Abschnitt 3 und ein darunter angeordnetes Kaminrohr 2 mit einem kopfartig radial nach außen erweiterten oberen Abschnitt 4 dargestellt, der bei 5 in den zylindrischen Rohrabschnitt übergeht, derart, daß die Innenseite des Rohres 1 und die Innenseite des Rohres 2 einen Zylinder gleichbleibenden Durchmessers bilden. Die Unterseite 6 des Rohres 1 und der horizontale Abschnitt des Knieteiles 7 des Rohres 2 bilden zusammen mit den einander zugewandten vertikalen Flächen der Rohrabschnitte 3 und 4 einen zylindrischen, vertikalen Spalt 8 aus, der nach innen in einen horizontalen Spalt übergeht und der zur Aufnahme der horizontalen Ringdichtung 9 sowie der vertikalen zylinderförmigen Dichtung 10 dient. Das untere Ende der Dichtung 10 steht dabei in Kontakt mit der äußeren Umfangsfläche 12 der Dichtung 9.

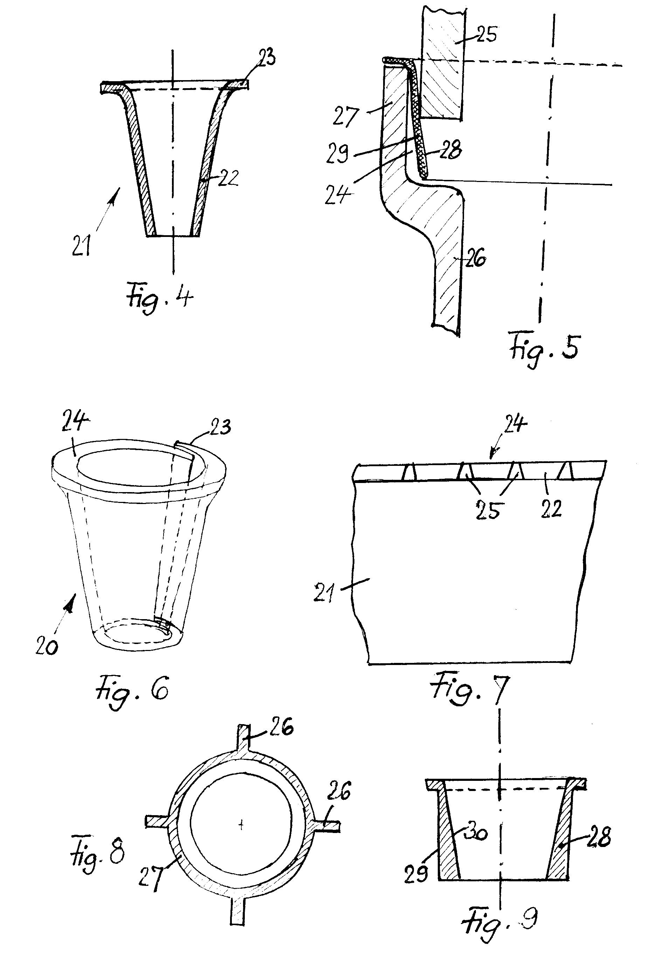

Bei der Ausführungsform nach Fig. 2 ist die Dichtung 13 einstückig so ausgebildet, daß sie aus einem zylinderförmigen Teil 14 und einem horizontalen Ringteil 15 besteht. Die Dichtung 13 wird auf die Innenseite des Kopfteiles 4, 5 des unteren Rohres festgelegt und das obere Rohr 1 wird eingesetzt, so daß es auf dem Abschnitt 15 der Dichtung 13 aufliegt und die Dichtung unter Druck setzt. Da der Abschnitt 14 der Dichtung 13 den zylindrischen Raum 8 weitgehend ausfüllt, liegt die Dichtung 13 in zusammengesetztem Zustand der Rohre 1 und 2 fest an den jeweiligen Rohrwänden an und dient damit sowohl der Abdichtung als auch der Führung der Rohre.

Die Dichtung 10 bzw. die Dichtung 13 ist nach einer speziellen Ausführungsform der Neuerungso ausgebildet, daß sie von oben nach unten eine sich konisch verjüngende Form hat, wobei die Dichtung wahlweise eine gleichbleibende (Fig. 4) oder eine nach unten zunehmende radiale Dicke (Fig. 9) hat. Die Dicke ist dabei in der Regel geringer als der radiale Spalt zwischen den beiden sich übergreifenden Rohren (Fig. 5).

Die Abdichtvorrichtung 21 nach Fig. 4 ist ein rotationssymmetrisches, konisches Gebilde mit einer Mantelfläche und einer am oberen Ende sich radial nach außen erstreckenden, ringförmigen Erweiterung 23, die z.B. die Form einer Wulst haben kann. Die Dichtung nach Fig. 4 ist gepreßt oder gegossen.

Eine Dichtung 21 ist in Fig. 5 in den Spalt 24 zwischen zwei übereinander angeordneten Kaminrohren 25 und 26 eingesetzt. Das Kaminrohr 26 weist im Überlappungsbereich der Rohre 25 und 26 einen kopfförmigen Abschnitt 27 auf, in den der Fuß des Rohres 25 eingesetzt wird. Die Innenfläche 28 des Mantels 22 der Dichtung 21 kommt mit der Außenkante des Rohrfußes 25 in Eingriff, während die Außenfläche 29 des Mantels 22 aufgrund der konischen Mantelform einen Abstand zur Innenfläche des Kopfes 27 des Rohres 26 hat. Aufgrund der konischen Ausführung des Mantels 22 entsteht ein Dichteingriff zwischen dem unteren Ende des Rohres 25 und dem Mantel 22 der Abdichtvorrichtung 21, deren oberes Ende mit der radial nach außen gerichteten Erweiterung 23 an der Oberkante des Kopfes 27 anliegt und dort aufgrund der Erweiterung 23 fixiert wird.

Während die Ausführungsform der Abdichtvorrichtung 21 nach Fig. 4 in ihrer Form durch Pressen oder Gießen festgelegt ist, ist eine andere Variante dieser Abdichtvorrichtung in Fig. 6 dargestellt. Die Abdichtvorrichtung 30 wird aus einem flächigenGebilde 31 mit erweitertem Rand 32 zu der konischen Dichtung zusammengerollt und in den Ringraum zwischen den beiden Rohren 25 und 26 eingesetzt, derart, daß Anfang und Ende des flächigen Gebildes 31 einander überlappen (bei 33). Die radial nach außen verlaufende Erweiterung 34, die der Erweiterung 3 nach Fig. 1 entspricht, wird beispielsweise in der flächigen Dichtung 30 durch radiale Einschnitte 35, die etwa rechtwinkling zur Mantelfläche 31 abgebogen werden, erreicht. Mit einer derartigen Ausführungsform einer Abdichtvorrichtung kann eine einfache Anpassung an unterschiedliche Rohrdurchmesser und eine besonders einfache Herstellung der Dichtung erreicht werden. Das Aufwickeln der flächig vorliegenden Abdichtvorrichtung erfolgt dabei nach Art einer offenen Manschette, die beispielsweise durch einen Verschluß in ihrer gerollten Position gehalten sein kann, z.B. durch einen Klettverschluß, damit der jeweils gewünschte Durchmesser fixiert wird. Um eine solche im Ursprungszustand als Fläche vorliegende Dichtung mit einem sich radial nach außen erweiternden Rand einsetzen zu können, ist dieser Rand vorzugsweise mit Einkerbungen, Einschnitten 35 oder dergl. versehen, damit der Rand entsprechend in die horizontale Ebene abgebogen werden kann. Anstelle eines derartigen Randbereiches können, wie in Fig. 8 angedeutet, streifenartige oder fingerartige Flansche 36 vorgesehen sein, die mit der Mantelfläche 37 befestigt sind, und die als Haltestege wirken. Alternativ kann der erweiterte Randbereich auch in Form einer Ringwulst ausgebildet sein.

Bei einer anderen Ausführungsform der Neuerung nach Fig. 9 ist die Mantelfläche 38 der Abdichtvorrichtung nach unten mit sich kontinuierlich oder stufenweise vergrößernder Dicke ausgebildet, so daß die Außenfläche 39 des Mantels 38 etwa zylindrisch verläuft, während die Innenfläche 40 konisch ausgebildet ist und zur Anlage mit dem Fuß des Rohres 25 gelangt.

## Patentansprüche

1. Abdichtvorrichtung für Kaminrohre, die so übereinander angeordnet sind, daß der untere Abschnitt des jeweils oberen Rohres von einem kopfartig erweiterten ringförmigen Abschnitt des jeweils unteren Rohres aufgenommen ist und beide Rohrabschnitte unter Zwischenschaltung einer horizontalen Ringdichtung übereinander gsetzt sind, **dadurch gekennzeichnet**, daß im zylindrischen Ringraum (8) zwischen zwei ineinander angeordneten Ringraumabschnitten (3, 4) zweier übereinander gesetzter Rohre (1, 2) eine zylinderförmige, zumindest teilelastische Dichtung (10; 13)) angeordnet ist, deren untere Begrenzung (11) an die horizontale Ringdichtung (9) anschließt, und daß die zylinderförmige Dichtung (10; 13) gleichzeitig eine Führung zwischen den beiden Rohrabschnitten (3, 4) ausbildet.

2. Abdichtvorrichtung nach Anspruch 1, dadurch gekennzeichnet, daß die vertikale, zylindrische Dichtung (10; 13) und die horizontale Ringdichtung (9) miteinander einstückig ausgebildet sind.

3. Abdichtvorrichtung nach Anspruch 2, dadurch gekennzeichnet, daß die Form der Zylinderdichtung der Form des gekrümmten Kopfes (4, 5) des erweiterten Rohrabschnittes (4) angepaßt ausgebildet ist.

4. Abdichtvorrichtung nach einem der Ansprüche 1 - 3, dadurch gekennzeichnet, daß die vertikale zylindrische Dichtung (10; 13) eine sich konisch nach unten erweiternde Zylinderwand (16) ist, deren Dicke im unteren Bereich größer oder gleich dem Abstand der beiden ineinander gesteckten Rotorabschnitte (3, 4) ist.

5. Abdichtvorrichtung für Kaminrohre, die so übereinander angeordnet sind, daß der untere Abschnitt des jeweils oberen Rohres von einem kopfartig erweiterten ringförmigen Abschnitt (Muffe) des jeweils unteren Rohres aufgenommen ist und beide Rohrabschnitte unter Zwischenschaltung einer Ringdichtung übereinander gesetzt sind, welche im zylindrischen Ringraum zwischen den beiden ineinander angeordneten Ringabschnitten als im wesentlichen zylinderförmige, elastische Dichtung angeordnet ist,
dadurch gekennzeichnet, daß die Dichtung im Bereich zwischen den beiden Ringraumabschnitten konisch ausgebildet und koaxial zur Rohrachse eingesetzt ist, und daß der Dichtungsdurchmesser am oberen Ende des kopfartig erweiterten Rohrabschnittes größer ist als am entgegengesetzten Ende.

6. Abdichtvorrichtung für Kaminrohre, die so übereinander angeordnet sind, daß der untere Abschnitt des jeweils oberen Rohres von einem kopfartig erweiterten ringförmigen Abschnitt (Muffe) des jeweils unteren Rohres aufgenommen ist und beide Rohrabschnitte unter Zwischenschaltung einer Ringdichtung übereinander gesetzt sind, welche im zylindrischen Ringraum zwischen den beiden ineinander angeordneten Ringabschnitten als im wesentlichen zylinderförmige, elastische Dichtung angeordnet ist,
dadurch gekennzeichnet, daß die Dichtung vom oberen Ende des kopfartig erweiterten Rohrabschnittes zum unteren Ende verlaufend mit zunehmender Wandstärke ausgebildet ist.

7. Abdichtvorrichtung nach Anspruch 5 oder 6, dadurch gekennzeichnet, daß die Dichtung am oberen Ende des kopfartig erweiterten Rohrabschnittes eine radial nach außen verlaufende Erweiterung aufweist, und daß die Erweiterung vorzugsweise ein kreisförmig ausgebildeter Umfangsflansch ist, bzw. wahlweise aus einzelnen, radial nach außen gerichteten Flanschen besteht, der bzw. die für das Aufsitzen auf der Oberseite des kopfartig erweiterten Rohrabschnittes ausgebildet ist bzw. sind.

8. Abdichtvorrichtung nach einem der Ansprüche 5 - 7, dadurch gekennzeichnet, daß die Länge des Mantels der Dichtung erheblich kleiner ausgebildet ist als die Länge des kopfartig erweiterten Rohrabschnittes.

9. Abdichtvorrichtung nach einem der Ansprüche 5 - 8, dadurch gekennzeichnet, daß die Dichtung mit Graphit getränkt ist bzw. auf den Oberflächen mit einer Graphitschicht versehen ist.

10. Kaminrohrverbindung, bei der der untere Abschnitt des jeweils oberen Rohres von einem kopfartig erweiterten ringförmigen Abschnitt (Muffe) des jeweils unteren Rohres aufgenommen ist und der Ringspalt zwischen den beiden einander zugewandten Oberflächen der Ringraumabschnitte eine Ringdichtung aufweist, dadurch gekennzeichnet, daß die Dichtung als konisches Rohr ausgebildet ist, dessen Innenmantel mit der Außenseite des oberen Rohrabschnittes, und dessen Außenseite mit der Innenseite des unteren, kopfartig erweiterten Rohrabschnittes in Kontakt steht, und daß die Dichtung im oberen Bereich einen Abstand zum Innenrohr und auf der entgegengesetzten Unterseite einen Abstand zum Außenrohr aufweist.
